# EUROPEAN PATENT APPLICATION

(11) **EP 4 733 867 A1**
(43) Date of publication of application: **29.04.2026**
(21) Application number: 23942483.1
(22) Date of filing: 28.11.2023
(51) Int. Cl.: G05B 19/05

(54) **CONTROL PROGRAM GENERATION DEVICE, CONTROL PROGRAM GENERATION SYSTEM, AND CONTROL PROGRAM GENERATION METHOD**

(30) Priority: 21.06.2023 JP 2023101958
(71) Applicant: Hitachi Industrial Equipment Systems Co., Ltd., Tokyo 101-0021 (JP)
(72) Inventor: NAGAI Yutaka, Tokyo 100-8280 (JP); OHTOSHI Sanato, Tokyo 100-8280 (JP)
(74) Representative: MERH-IP Matias Erny Reichl Hoffmann Patentanwälte PartG mbB
(86) International application number: PCT/JP2023/042488
(87) International publication number: WO 2024/262055

(57) **Abstract**

The present invention comprises: a causal relationship detection unit that detects causal relationship information obtained by classifying at least two change points that were generated at substantially the same timing among change points detected by a change point detection unit into a cause and a result on the basis of said at last two change points; and a program generation unit that generates a control program for a control target on the basis of the causal relationship information.

## Description

### TECHNICAL FIELD

The present invention relates to a control program generation device, a control program generation system, and a control program generation method.

### BACKGROUND ART

Background of the invention is, for example, Patent Document 1. Patent Document 1 discloses that a PLC ladder program is automatically generated from input data when a user inputs a time chart accompanied by causal relationship information in order to support creation of a control program.

### CITATION LIST

### PATENT DOCUMENT

Patent Document 1: JP 7-191717 A

### SUMMARY OF THE INVENTION

### PROBLEMS TO BE SOLVED BY THE INVENTION

In Patent Document 1, for example, in the case of a PLC, a user does not need to directly code a ladder program for a control program.

However, the user needs to input a timing chart including causal relationship information of each element related to a production line, a conveying line, etc. to be controlled, which places a heavy burden on the user. In addition, the user needs to have the skill to plan the entire sequence.

An object of the invention is to significantly reduce programming burden on a user in a control program generation device.

### SOLUTIONS TO PROBLEMS

A control program generation device of an aspect of the invention includes a change point detection unit configured to detect change points indicating occurrence of an operation at each timing of a plurality of component reproduced by a simulation model for a control target including the components from an output result of the simulation model, a causal relationship detection unit configured to detect causal relationship information for classifying two or more change points occurring at substantially the same timing among the change points detected by the change point detection unit into a cause and a result based on the two or more change points, and a program generation unit configured to generate a control program for the control target based on at least the causal relationship information.

### EFFECTS OF THE INVENTION

According to an aspect of the invention, it is possible to significantly reduce a burden related to programming on a user in a control program generation device.

### BRIEF DESCRIPTION OF THE DRAWINGS

Fig. 1 is a block diagram of a system for automatically generating a control program.
Fig. 2 is a flowchart of a method of automatically generating the control program.
Fig. 3 is a timing chart illustrating the method of automatically generating the control program.
Fig. 4 is an explanatory diagram illustrating an automatic manufacturing line or an automatic conveying line suitable for the invention.
Fig. 5 is a timing chart illustrating the method of automatically generating the control program.
Fig. 6 is a timing chart illustrating the method of automatically generating the control program.
Fig. 7 is a timing chart illustrating the method of automatically generating the control program.
Fig. 8 is a timing chart illustrating the method of automatically generating the control program.
Fig. 9 is an explanatory diagram illustrating the method of automatically generating the control program.
Fig. 10 is a flowchart illustrating the method of automatically generating the control program.
Fig. 11 is a flowchart illustrating the method of automatically generating the control program.
Fig. 12 is a flowchart illustrating the method of automatically generating the control program.
Fig. 13 is a flowchart illustrating the method of automatically generating the control program.
Fig. 14 is a block diagram of a control program development device.
Fig. 15 is a block diagram of a simulation system for a production line or a conveying line.
Fig. 16 is a block diagram of an industrial control device.
Fig. 17 is a diagram illustrating a template for generating the control program.

### MODE FOR CARRYING OUT THE INVENTION

Hereinafter, embodiments of the invention will be described.

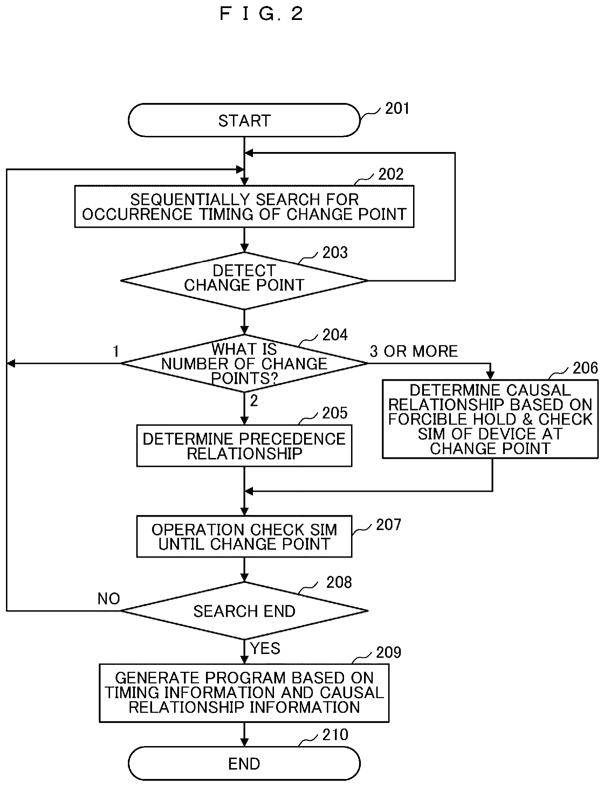

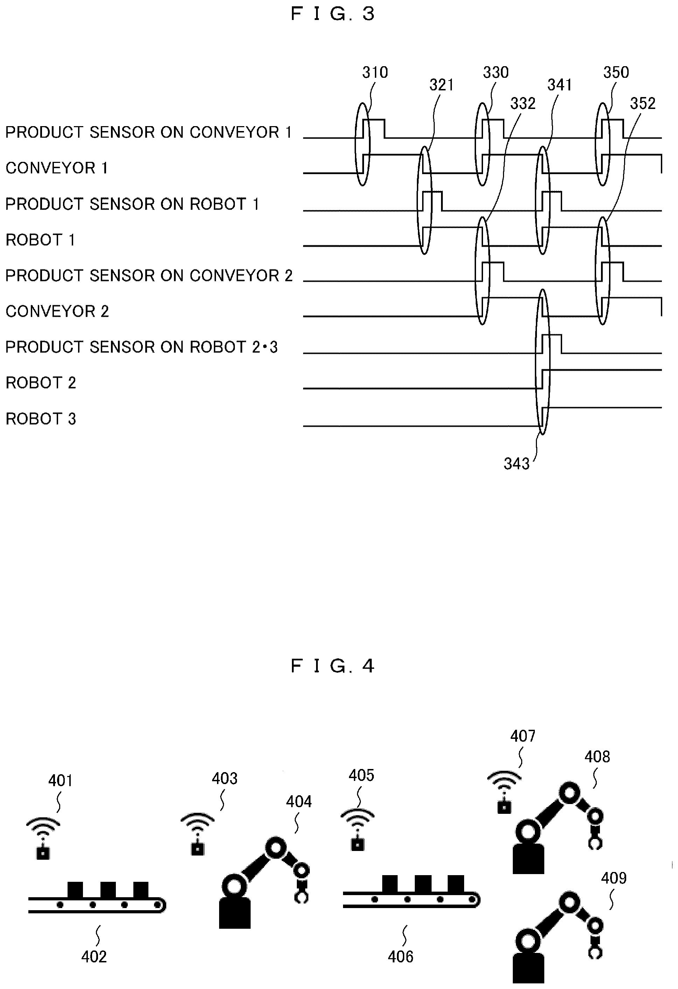

A first embodiment of a method of automatically generating a control program will be described with reference to Figs. 2, 3, and 4. Fig. 2 is a flowchart of a method of automatically generating the control program according to this embodiment. Fig. 3 is a timing chart for describing an operation of automatically generating the control program according to this embodiment. Fig. 4 is an explanatory diagram illustrating a 3D simulation model of an automated manufacturing line or conveying line subjected to automatic generation of the control program.

In Fig. 4, reference numeral 401 denotes an object sensor that generates a short pulse in response to detecting that a workpiece (an object to be manufactured or conveyed) has arrived at an input position to a conveyor 402. In the 3D simulation model of this embodiment, modeling is performed so that control is performed to start the conveyor 402 when 401 detects a workpiece 1). Reference numeral 403 denotes an object sensor that generates a short pulse in response to detecting that the workpiece has arrived at a robot 404.

In the 3D simulation model of this embodiment, modeling is performed so that control is performed to stop the conveyor 402 and start the robot 404 when 403 detects the workpiece (2). Reference numeral 405 denotes an object sensor that generates a short pulse in response to detecting that the workpiece has reached a conveyor 406 from the robot 404.

In the 3D simulation model of this embodiment, modeling is performed so that control is performed to stop the robot 404 and start the conveyor 406 when 405 detects the workpiece (3). Reference numeral 407 denotes an object sensor that generates a short pulse in response to detecting that the workpiece has reached a robot 408 or 409. In the 3D simulation model of this embodiment, modeling is performed so that control is performed to start the robots 408 and 409 when 407 detects the workpiece (4).

As described above, the 3D simulation model of this embodiment includes the respective machine elements 401 to 409 and the control elements shown in (1) to (4). Note that a description method for the control elements such as (1) to (4) differs depending on each simulation vendor.

The timing chart of Fig. 3 illustrates an operation of the 3D simulation model.

In this timing chart, product sensor on conveyor 1 (a name given to a product sensor on conveyor 1) indicates the operation timing of the object sensor 401, and conveyor 1 indicates the operation timing of the conveyor 402.

Product sensor on robot 1 (a name given to a product sensor on robot 1) indicates the operation timing of the object sensor 403. Robot 1 indicates the operation timing of the robot 404, and product sensor on conveyor 2 (a name given to a product sensor on conveyor 2) indicates the operation timing of the object sensor 405.

Conveyor 2 indicates the operation timing of the conveyor 406, product sensor on robots 2 and 3 (a name given to product sensors on robots 2 and 3) indicates the operation timing of the object sensor 407, robot 2 indicates the operation timing of the robot 408, and robot 3 indicates the operation timing of the robot 409.

At a spot of 310 on this timing chart, the above-mentioned operation (1) occurs in which, when 401 detects the workpiece, the conveyor 402 is started. Reference numeral 310 indicates that operation of conveyor 1 starts at substantially the same timing when a pulse of product sensor on conveyor 1 is generated.

Note that, even though pulse generation of product sensor on conveyor 1 and start of conveyor 1 occur at substantially the same timing, pulse generation of product sensor on conveyor 1 is a phenomenon serving as a cause and start of conveyor 1 is a phenomenon serving as a result, so that pulse generation of product sensor on conveyor 1 precedes start of conveyor 1 by a slight timing.

At a spot of 321 on this timing chart, the above-mentioned operation (2) occurs in which, when 403 detects the workpiece, the conveyor 402 is stopped and the robot 404 is started. Reference numeral 321 indicates that operation of conveyor 1 is stopped at substantially the same timing and operation of the robot 404 starts when a pulse of product sensor on conveyor 1 is generated.

Note that, even though pulse generation of product sensor on conveyor 1, stop of conveyor 1, and start of robot 1 occur at substantially the same timing, pulse generation of product sensor on conveyor 1 is a phenomenon serving as a cause and stop of conveyor 1 and start of robot 1 are phenomena serving as results, so that pulse generation of product sensor on robot 1 precedes stop of conveyor 1 and start of robot 1 by a small amount of timing. A precedence relationship in timing between stop of conveyor 1 and start of robot 1 can be either precedence, complete simultaneousness, or delay, since there is no causal relationship therebetween.

At a spot of 330 on this timing chart, the above-mentioned operation (1) occurs in which, when 401 detects the workpiece, the conveyor 402 is started. Reference numeral 330 indicates that, when an additional workpiece is input and a pulse of product sensor on conveyor 1 is generated, operation of conveyor 1 starts at substantially the same timing.

Note that, even though pulse generation of product sensor on conveyor 1 and start of conveyor 1 occur at substantially the same timing, pulse generation of product sensor on conveyor 1 is a phenomenon serving as a cause and start of conveyor 1 is a phenomenon serving as a result, so that pulse generation of product sensor on robot 1 precedes start of conveyor 1 by a small amount of timing.

At a spot of 332 on this timing chart, the above-mentioned operation (3) occurs in which, when 405 detects the workpiece, the robot 404 is stopped and the conveyor 406 is started. Reference numeral 332 indicates that operation of conveyor 1 is stopped at substantially the same timing and operation of conveyor 2 starts when a pulse is generated at product sensor on conveyor 2.

Note that, even though pulse generation of product sensor on conveyor 2, stop of robot 1, and start of conveyor 2 occur at substantially the same timing, pulse generation of product sensor on conveyor 2 is a phenomenon serving as a cause, so that pulse generation of product sensor on conveyor 2 precedes stop of robot 1 and start of the conveyor 2 by a small amount of timing. A precedence relationship in timing between stop of robot 1 and start of conveyor 2 can be either precedence, complete simultaneousness, or delay, since there is no causal relationship therebetween.

A spot of 341 on this timing chart is an operation on an additional workpiece, and is the same operation as that described for 321. The above-mentioned operation (2) occurs in which, when 403 detects the workpiece, the conveyor 402 is stopped and the robot 404 is started. Reference numeral 321 indicates that operation of conveyor 1 is stopped at substantially the same timing and operation of the robot 404 starts when a pulse of product sensor on conveyor 1 is generated.

Note that, even though pulse generation of product sensor on conveyor 1, stop of conveyor 1, and start of robot 1 occur at substantially the same timing, pulse generation of product sensor on conveyor 1 is a phenomenon serving as a cause, so that pulse generation of product sensor on robot 1 precedes stop of conveyor 1 and start of robot 1 by a small amount of timing. A precedence relationship in timing between stop of conveyor 1 and start of robot 1 can be either precedence, complete simultaneousness, or delay, since there is no causal relationship therebetween.

At a spot of 343 on this timing chart, the above-mentioned operation (4) occurs in which, when 407 detects the workpiece, the conveyor 406 is stopped and the robot 408 and the robot 409 are started. Reference numeral 343 indicates that, when a pulse of product sensor on robot 2·3 is generated, operation of conveyor 2 stops at substantially the same timing, and operations of the robots 408 and 409 are started.

Note that, even though pulse generation of product sensor on robot 2·3, stop of conveyor 2, and start of robots 2·3 occur at substantially the same timing, pulse generation of product sensor on robot 2·3 is a phenomenon serving as a cause, so that pulse generation of product sensor on robot 2·3 precedes stop of conveyor 2 and start of robots 2·3 by a small amount of timing. A precedence relationship in timing between stop of conveyor 2 and start of robots 2·3 can be either precedence, complete simultaneousness, or delay, since there is no causal relationship therebetween.

A description for a spot of 350 on this timing chart is similar to that for the spot of 310 and the spot of 330. A description for a spot of 352 on this timing chart is similar to that for the spot of 332.

When a simulation is performed on the 3D simulation model of Fig. 4, the timing chart illustrated in Fig. 3 is obtained as a result. However, the causal relationship used in the description of the timing chart is not output as a simulation result.

The flowchart of Fig. 2 illustrates a method of automatically generating a control program for the 3D simulation model illustrated in Fig. 4 from the timing information illustrated in Fig. 3 and causal relationship information by reproducing the causal relationship information from this timing information.

In the flowchart of Fig. 2, reference numeral 201 indicates start of processing, reference numeral 202 indicates that change points of respective components illustrated in Fig. 3 are searched for at time 0, from a left end of the figure in order in the case of Fig. 3, and reference numeral 203 is for determining whether a change point such as 310 to 352 of Fig. 3 is at each timing.

Reference numeral 204 indicates process for determining how many change points there are in the substantially the same timing when it is determined that there is a change point, and when there is only one substantially the same timing element, an error process is performed or nothing is done.

When there are two substantially the same timing elements, as illustrated in description of 310 of Fig. 3, there should be a physical precedence relationship between a causal phenomenon and a resulting phenomenon, and thus it is determined which of the two elements is a cause (in the case of 310, the product sensor on conveyor 1) and which is a result based on the precedence relationship (205).

However, there may be rare cases where time resolution is below that of a simulator, and a physically existing survival relationship cannot be correctly measured, leading to an erroneous determination of the same timing or an incorrect precedence relationship. However, it is possible to determine a causal relationship by performing process for the case where there are three or more substantially the same timing elements as the error process.

When there are three or more substantially the same timing elements, the causal relationship cannot be determined from the precedence relationship alone, so one of the devices at the change point is forcibly held and a simulation is then performed to determine the causal relationship based on whether the forcible hold causes a change in simulation results of the other elements at substantially the same timing (206).

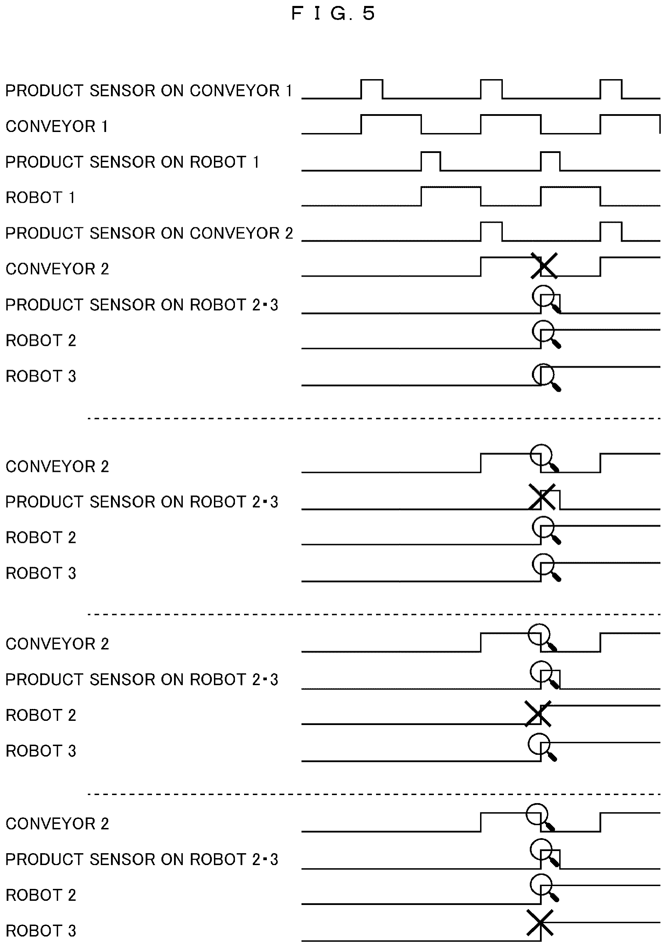

Process 206 will be described in detail with reference to Fig. 5. In step 207, control is performed based on the causal relationships obtained 205 and 206 to check whether a determination result is correct. In step 208, it is verified whether determination work related to the causal relationship of the change point over the entire time range in which the simulation is performed has been completed, and if so, a control program for a PLC, etc. is generated from the timing relationship and the causal relationship over the entire time range (209). After the control program has been automatically generated in a process up to 209, the entire process is ended (210).

As described above, according to this embodiment, it is possible to extract the causal relationship between the respective devices from the simulation result using the 3D simulation model, and it is possible to automatically generate a sequence control program for the automated manufacturing line or conveying line from the timing information and the causal relationship information. Therefore, after performing verification using the simulation model of the manufacturing line or the conveying line, a sequence control program can be easily and quickly obtained without having specialized knowledge of control language for the PLC, etc.

Furthermore, when there is a function to output information on change timing obtained in any 3D model simulator to the outside without searching for a description of sequence control in the model operation description of the simulator and converting a part corresponding to sequence control, and when there is a function to forcibly hold a designated spot prepared for debugging in a normal simulator at designated timing, it becomes possible to automatically generate a sequence control program. Therefore, it becomes possible to obtain the same effect in many 3D model simulations without depending on a specific simulator.

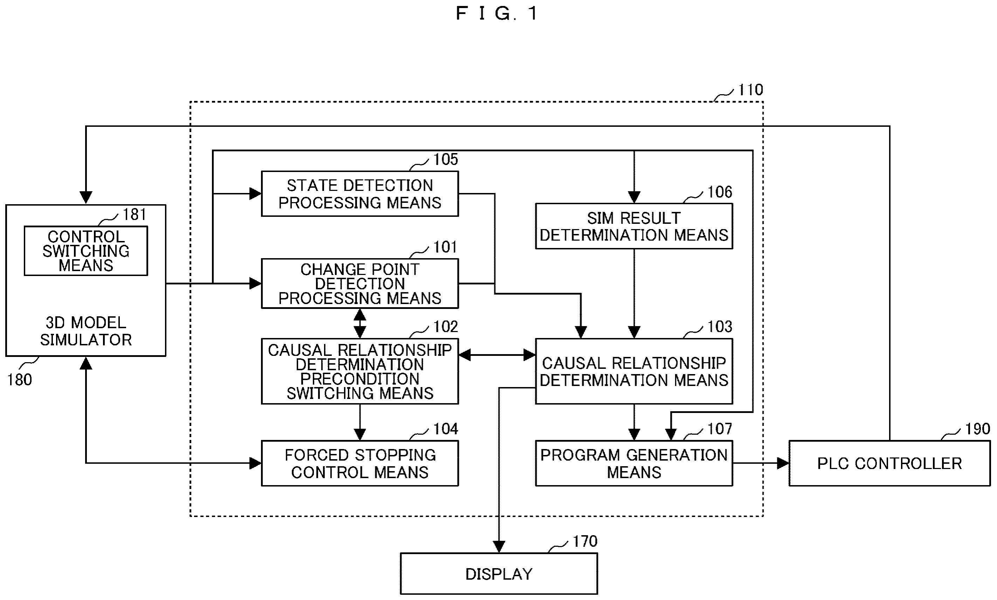

An embodiment of an automatic generation device for the control program will be described with reference to Fig. 1. Fig. 1 is a block diagram of the automatic generation device for the control program according to this embodiment.

In Fig. 1, reference numeral 101 denotes a change point detection processing means, which performs a process of detecting change points indicated by 202 and 203 of Fig. 2. Reference numeral 102 denotes a causal relationship determination precondition switching means, which is a means for switching a process of extracting a causal relationship depending on how many change points are present at substantially the same timing in a process corresponding to 204 of Fig. 2. When there are two change points at substantially the same timing, a detection instruction is returned to 101, and 101 sends precedence relationship information between substantially the same change points to a causal relationship determination means 103.

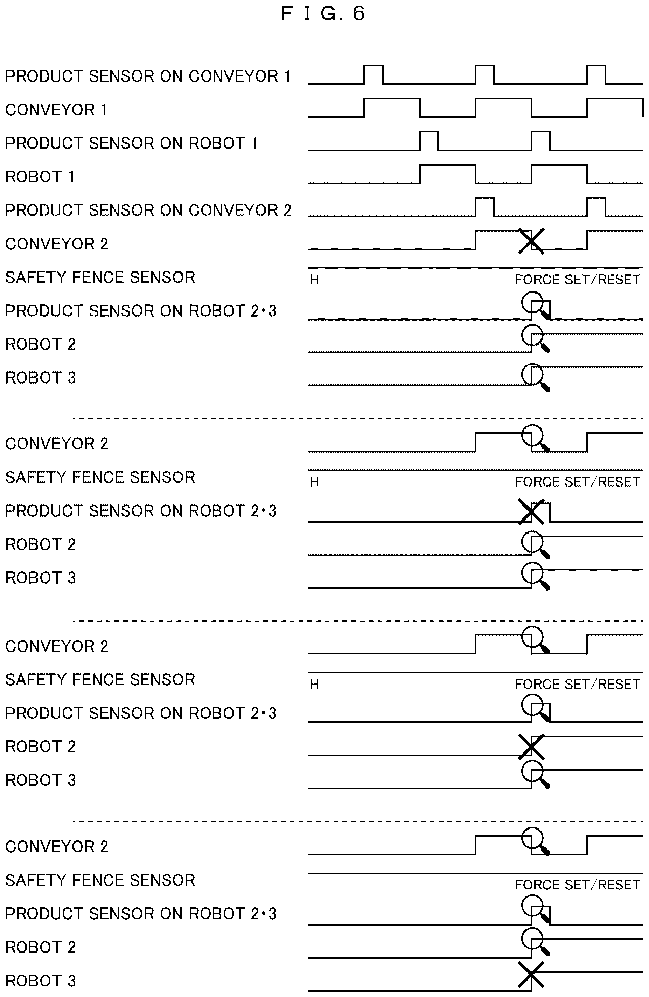

When there are three or more change points at substantially the same timing, the forced stopping control means 104 causes the 3D simulation model 180 to be forced to stop at designated timing, and a simulation result in this case is sent to a Sim result determination means 106, which determines whether there is a change in the simulation result other than a forcedly stopped element among elements having change points at substantially the same timing. Reference numeral 105 denotes a state detection processing means which detects a predetermined state (see Fig. 6).

The causal relationship determination means 103 determines the causal relationship from the precedence relationship information sent from the change point detection processing means 101 or the simulation result sent from the Sim result determination means 106 under a condition in which forcible hold is performed (corresponding to the processes of 205 and 206 of Fig. 2).

A program generation means 107 automatically generates a control program based on the causal relationship information sent from the causal relationship determination means 103 and the timing information sent from the 3D simulation model 180 (corresponding to the process of 209 of Fig. 2).

The automatically generated program is sent to a PLC controller 190, and the 3D simulation model 180 is controlled by sequence control by the PLC controller 190 to perform virtual verification. In this instance, a mode of the 3D simulation model 180 is switched by the control switching means 181 so that the 3D simulation model 180 receives external control instead of normal internal control description.

In addition, after verification is completed, although not illustrated in Fig. 1, by connecting an actual machine to the PLC controller 190, the actual machine can be controlled by a PLC program finishing integrated verification with the 3D simulation model.

As described above, according to this embodiment, it is possible to extract the causal relationship between the respective devices from the simulation result using the 3D simulation model, and it is possible to obtain a device that automatically generates a sequence control program for the automated manufacturing line or conveying line from the timing information and the causal relationship information. Therefore, after performing verification using the simulation model of the manufacturing line or the conveying line, a sequence control program can be easily and quickly obtained without having specialized knowledge of control language for the PLC, etc.

In addition, since it is possible to control the 3D simulation model, the automatically generated PLC program can perform integrated verification with the 3D simulation model, making it possible to easily realize virtual integrated verification.

Details of the process 206 in the description of the embodiment illustrated in Fig. 2 will be described with reference to Fig. 5.

At substantially the same timing when the spot of 341 and the spot of 343 illustrated in Fig. 3 are present, even elements have change points. A causal relationship between product sensor on robot 1, stop of conveyor 1, and start of robot 1 is previously extracted at the spot of 321. Assuming that the causal relationship does not change even at the spot of 341, during execution of a simulation of one of the four elements of 343 excluding the three elements of 341, by performing forcible hold and observing changes of the other four elements, a causal relationship can be extracted.

Specifically, (1) when a simulation is performed by forcibly inhibiting stop of conveyor 2 and continuing operation (maintaining H on the chart) at the timing, it is verified whether there is change in a spot marked with a lens mark on product sensor on robot 2·3, whether there is change in a spot marked with a lens mark on robot 2, and whether there is change in a spot marked with a lens mark on robot 3.

(2) An edge spot of product sensor on robot 2·3 is forcibly stopped to verify whether there is change in a spot marked with a lens mark on conveyor 2, there is change in a spot marked with a lens mark on robot 2, and there is change in a spot marked with a lens mark on robot 3. (3) A start spot of robot 2 is forcibly held to observe four other lens mark spots. (4) A start spot of robot 3 is forcibly held to observe four other lens mark spots. When observing forcible hold of each of (1) to (4), an observation spot result changes only in the case of (2) in which product sensor on robot 2·3 is forcibly held, and thus it can be seen that a cause is an operation in which product sensor on robot 2·3 is a cause, and stop of conveyor 2, start of robot 2, and start of robot 3 are results.

As described above, according to this embodiment, a specific method of extracting a causal relationship when there are three or more change points at substantially the same timing is provided, and therefore a method of automatically generating a control program is more specifically illustrated. In addition, in this example, a causal relationship is extracted assuming that a causal relationship extracted once is retained (referring to an exclusion process of 341), and this method makes it possible to reduce the number of targets for a process of observing the presence or absence of change by sequentially performing forcible hold. For this reason, it is possible to significantly reduce the amount of processing in the extraction process and increase the speed.

A description will be given of the case where not only a change point is an element related to control but an element of whether a safety fence is in an OK state is also included in a causal relationship related to control with reference to Fig. 6.

In this example, a description will be given of the case where this causal relationship is extracted from a simulation result in a model in which an operation is started and stopped when the safety fence is in the OK state (safe state) and product sensor on robot 2·3 generates a pulse.

In this example, similarly to Fig. 5, the safety fence state is forcibly set/reset when each element of conveyor 2, product sensor on robot 2·3, robot 2, and robot 3 is forcibly held in order. The above processing is mainly performed using the state detection processing means 105 of Fig. 1.

As described above, according to this example, it is possible to extract a causal relationship even when the cause includes a state condition, and it is possible to automatically generate programs for a wider variety of controls.

A description will be given of an embodiment related to an automatic generation method corresponding to control including a counter process as a control program.

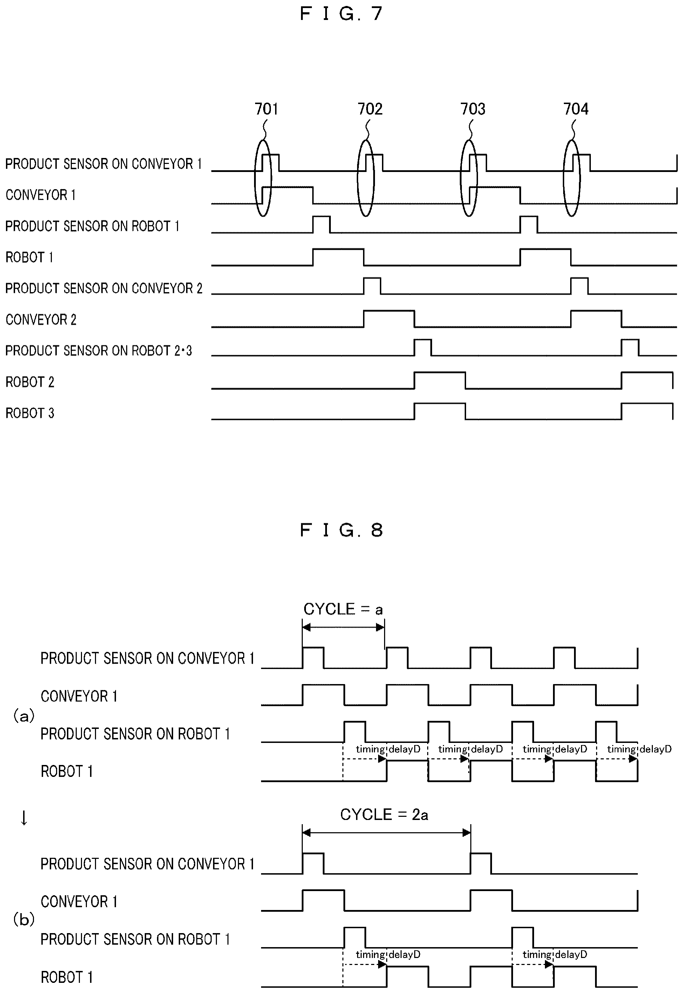

Fig. 7 is a timing chart obtained when a simulation is performed using a simulation model of an automated manufacturing line or conveying line as illustrated in Fig. 4 (in this model, the conveyor 402 starts operation every time the object sensor 401 performs detection twice), similarly to Fig. 3.

Fig. 7 illustrates that, at a spot of 701, in the same manner as described in Fig. 3, when 401 detects the workpiece, an operation of starting the conveyor 402 occurs, and when a pulse of product sensor on conveyor 1 is generated, conveyor 1 starts to operate at substantially the same timing. In this figure, unlike the description in Fig. 3, at a spot of 702, even when a pulse of product sensor on conveyor 1 is generated, conveyor 1 does not start to operate.

At a spot of 703, unlike 702 and similarly to 701, when a pulse of product sensor on conveyor 1 is generated, conveyor 1 starts to operate at substantially the same timing. In this figure, unlike 703 and similarly to 702, at a spot of 704, even when a pulse of product sensor on conveyor 1 is generated, conveyor 1 does not start to operate.

In other words, elements, product sensor on conveyor 1 and conveyor 1, whose change points occur at substantially the same timing at 701, may appear to have a causal relationship (701, 703) or not to have a causal relationship (702, 704). However, by observing the timing throughout the entire period, when a phenomenon occurs on product sensor on conveyor 1 an odd number of times, an operation of conveyor 1 occurs, i.e., a counter process can be extracted once every two times.

As described above, according to this embodiment, by checking occurrence of change points over the entire period for elements involved with occurrence of change points at substantially the same timing, it is possible to extract even control including a counter process occurring once every two times, etc. As a result, it is possible to automatically generate control programs for a variety of controls.

A description will be given of an embodiment related to an automatic generation method corresponding to control including a timer process (fixed delay process) as a control program with reference to Fig. 8.

The invention is based on obtaining a causal relationship between phenomena occurring at change points at substantially the same timing. However, when a fixed delay occurs in the timer process, a phenomenon that is a result of a cause does not occur at substantially the same timing, making it difficult to determine a causal relationship.

Fig. 8 illustrates a timing chart of an operation of a manufacturing line or a conveying line including the timer process. First, an upper part of Fig. 8 is examined. Here, it is assumed that, when product sensor on robot 1 detects an object and generates a pulse, robot 1 is started after a certain period of time D has elapsed.

Therefore, pulse generation of product sensor on robot 1 is a cause of a phenomenon, and start of robot 1 is a result of an operation. However, since there is a delay time D, a change point of start of robot 1 is an isolated phenomenon (a state in which only one is found in response to search at substantially the same timing), and when a phenomenon at substantially the same timing is treated as a subject of a causal relationship, a causal relationship determination method does not effectively function.

Therefore, it is necessary to accurately detect a spot having the timer process and correct a timer delay. In Fig. 8a and Fig. 8b, a workpiece input cycle is changed from a to 2a. In this way, even when a parameter is altered, the fixed delay is given as a constant, and thus there is no change regardless of the alteration.

Even though only change in cycle is illustrated in Fig. 8, a fixed delay section alone does not change even when parameters of operating speeds of mechanical parts such as the conveyor and the robot are changed. In this way, by varying parameters on the simulation model and extracting a timing relationship that does not change regardless of the variation, it is possible to accurately detect an extraction position of the timer process.

As described above, according to this embodiment, it is possible to correct a timer process spot even for the simulation model of the manufacturing line or the conveying line including the timer process. As a result, it is possible to apply an automatic generation process for the control program to any target.

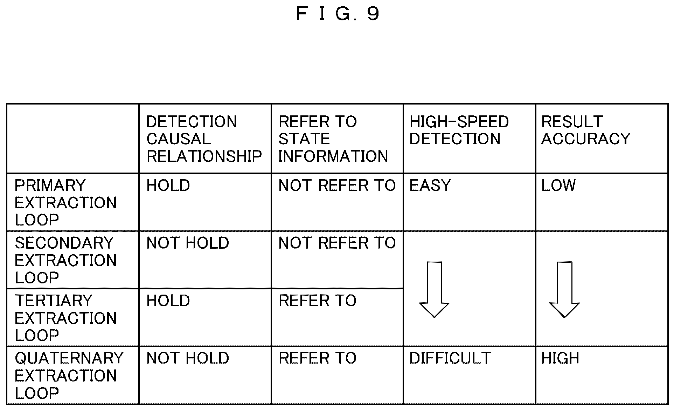

Another embodiment related to the method of automatically generating the control program will be described with reference to Fig. 9.

The description with reference to Fig. 5 indicates that "the causal relationship between product sensor on robot 1, stop of conveyor 1, and start of robot 1 has previously been extracted at the spot of 321, and assuming that the causal relationship does not change at the spot of 341, three elements of 341 are excluded."

This method of retaining the once determined causal relationship at subsequent timing can reduce the number of targets for a process of extracting a causal relationship at subsequent timing. In other words, the number of targets for which forcible hold is individually performed among target spots is reduced, and an effect of reducing a processing time is significant by reducing the number of simulation trials. However, when the causal relationship between product sensor on robot 1, stop of conveyor 1, and start of robot 1 changes each time, for example, when control is performed such that a causal relationship between product sensor on robot 1 and stop of conveyor 1 changes between 321 and 341 in the example of Fig. 3, it becomes impossible to accurately determine the causal relationship between these three.

In addition, while the description of Fig. 5 illustrates a case where a causal relationship is extracted only for a change point, the description of Fig. 6 illustrates a method of extracting a causal relationship by adding a state condition in addition to a change point. By adding a state condition and repeating a forcible hold process and a simulation trial, it becomes possible to handle a wider range of control variations, but this increases a processing time.

This example provides a method of accurately extracting a causal relationship for a wider range of control variations, and shortening a processing time for an automated manufacturing line or conveying line with basic control.

In a table of Fig. 9, a combination of conditions for determining a causal relationship is changed and trials are performed starting from a primary extraction loop. When a causal relationship cannot be successfully extracted, a trial is performed by changing a combination of conditions in a secondary extraction loop.

When a trial is performed in the primary extraction loop and a causal relationship cannot be successfully extracted, a trial is performed again with a different combination of conditions in the secondary extraction loop. When a trial is performed in the secondary extraction loop and a causal relationship cannot be successfully extracted, a trial is performed again with a different combination of conditions in a tertiary extraction loop. When a trial is performed in the tertiary extraction loop and a causal relationship cannot be successfully extracted, a trial is performed again with a different combination of conditions in a quaternary extraction loop.

Note that an extraction result of a causal relationship in each subsequent loop can be easily made successful by generating a control program based on the causal relationship, switching to control using the control program, and performing comparison with an original operation when the simulation model is operated.

A trial condition for the primary extraction loop has a relatively narrow application range and low automatic generation accuracy. However, as a combination that realizes high-speed determination, (1) a once determined causal relationship is retained, and state information is set to a combination not subjected to extraction of a causal relationship. A trial condition for the secondary extraction loop is that (2) a causal relationship is not retained, and state information is set to a combination not subjected to extraction of a causal relationship. A trial condition for the tertiary extraction loop is that (3) a causal relationship is retained, and state information is set to a combination subjected to extraction of a causal relationship. A trial condition for the quaternary extraction loop is that (4) a causal relationship is not retained, and state information is set to a combination subjected to extraction of a causal relationship.

By repeating trials from the primary extraction loop to the quaternary extraction loop with combinations of these conditions, it is possible to realize automatic generation of a control program with a shorter processing time for a model with simpler control, and with higher accuracy for a model with more complex control, although it takes longer to process.

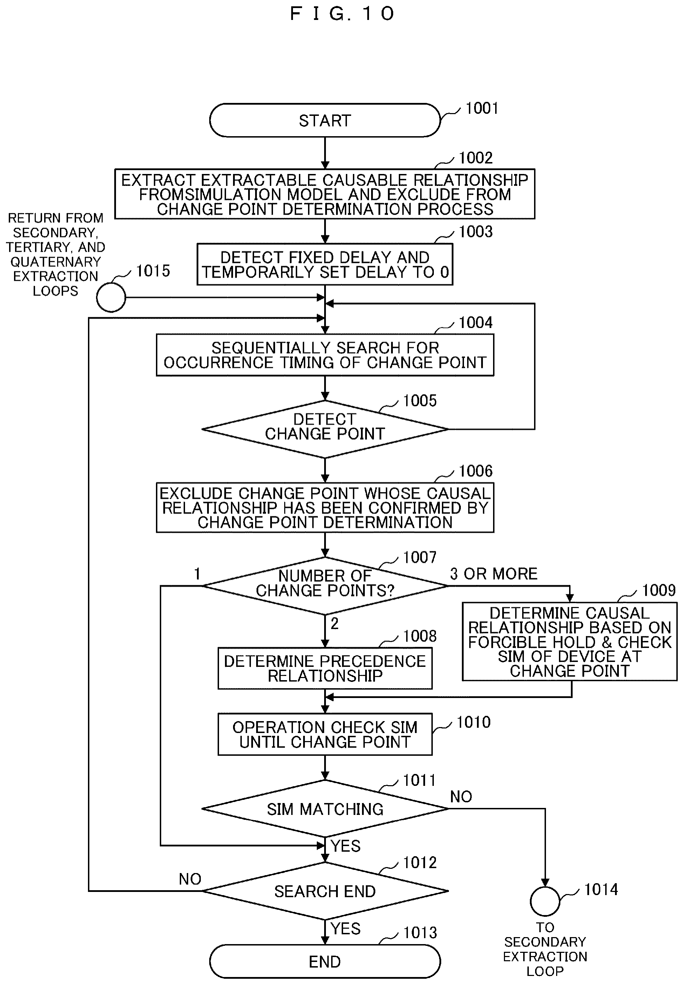

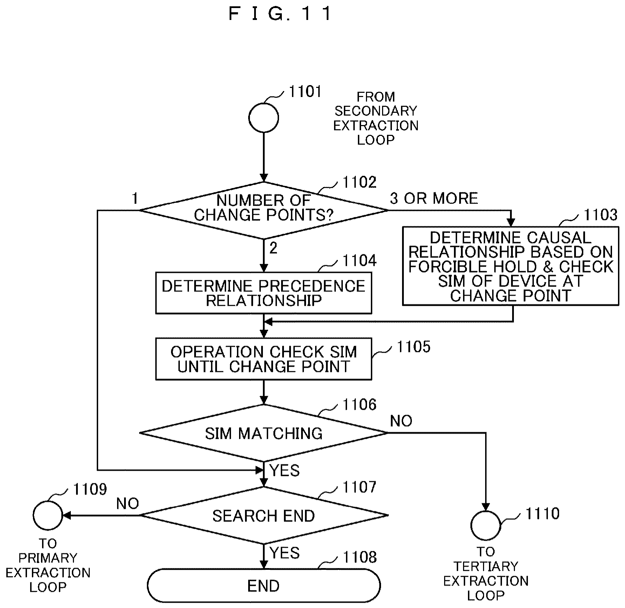

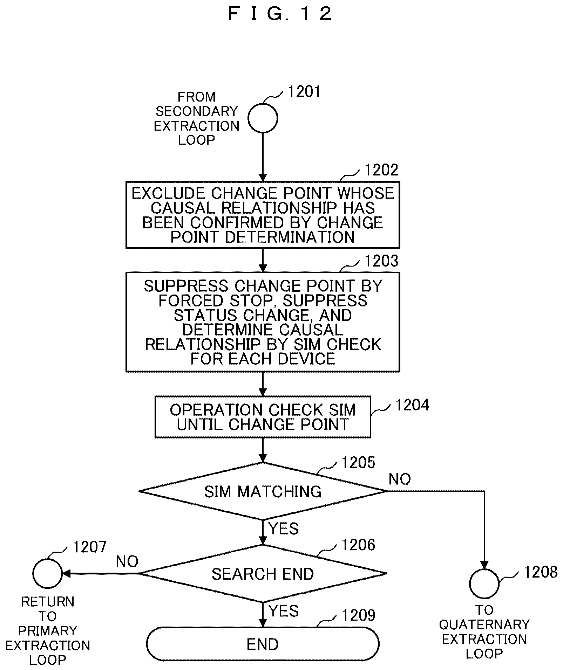

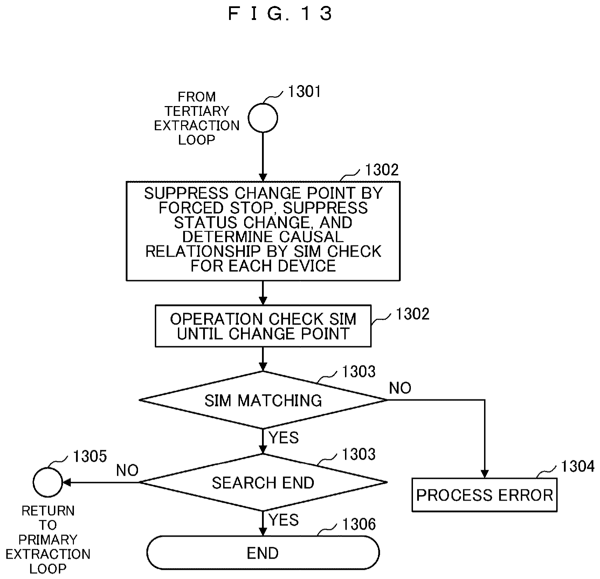

Detailed processing of the embodiment described with reference to Fig. 9 will be described with reference to Figs. 10, 11, 12 and 13. Fig. 10 is a flowchart illustrating details of processing of the primary extraction loop illustrated in the table of Fig. 9. Fig. 11 is a flowchart illustrating details of processing of the secondary extraction loop illustrated in the table of Fig. 9. Fig. 12 is a flowchart illustrating details of processing of the tertiary extraction loop illustrated in the table of Fig. 9. Fig. 13 is a flowchart illustrating details of processing of the quaternary extraction loop illustrated in the table of Fig. 9.

In Fig. 10, reference numeral 1001 indicates start of processing, and reference numeral 1002 indicates a process of excluding, as an already extracted part, any part in which a causal relationship between devices on a line is clearly described in the simulation model and is easy to extract although not based on a causal relationship through the timing chart of the present application. Reference numeral 1003 indicates a process of extracting a fixed delay by the timer process illustrated in Fig. 8, and for temporarily setting the detected delay to 0 so that it becomes possible to extract a causal relationship with a cause event that starts the timer. Reference numeral 1004 indicates a process of sequentially searching for change points from timing 0, similarly to 202. Reference numeral 1005 indicates a process of determining whether each timing has a change point, similarly to 203. Reference numeral 1006 indicates that, once a causal relationship has been determined in 1008 and 1009, which will be described later, and when the causal relationship is retained, the causal relationship is excluded from subsequent determination processing (processing for realizing retention of the determined causal relationship in the table of Fig. 9). Reference numeral 1007 indicates a process of determining how many change points there are in substantially the same timing, when it is determined that there is a change point, similarly to 204. When there is one substantially the same timing element, the causal relationship does not hold, and an error process, etc. is performed and extraction is not performed. When there are two elements, it is determined which of the two elements is a cause and which is a result from the precedence relationship (1008). When there are three almost identical timing elements, a causal relationship is determined by forcible hold & check Sim of the device corresponding to the change point (1009). The simulation is performed by switching to control by a control program automatically generated from the determined causal relationship information and timing information (1010). A determination process (1011) is performed to determine whether a simulation result is different from an original simulation result. When the results do not match each other, the process is shifted to the secondary extraction loop (1014). When the results match each other, the extracted causal ventilation is deemed correct, and the above process is repeated until the search end (1012). When the search ends, the process ends (1013).

In Fig. 11, reference numeral 1101 indicates that the process has shifted from the primary extraction loop illustrated in Fig. 10 to the secondary extraction loop of this figure. Similarly to 1007, reference numeral 1102 indicates a process of determining how many change points there are at substantially the same timing when it is determined that there is a change point. When there is only one change point at substantially the same timing element, the causal relationship does not hold and extraction is not performed by performing an error process, etc. When there are two change points, 1104 is performed, and when there are three or more change points, 1103 is performed. Reference numeral 1104 indicates a process of extracting a causal relationship based on a precedence relationship, similarly to 1008. Reference numeral 1103 indicates a process of extracting a causal relationship using forcible hold, similarly to 1009. Reference numeral 1105 indicates a simulation confirmation process, similarly to 1010. When a determination process of 1106 determines that there is no match, the process proceeds to the tertiary extraction loop, and when the process determines that there is a match, the process returns to the primary extraction loop to extract a causal relationship at subsequent timing (1109). In Fig. 11, by not including a process corresponding to a change point exclusion process corresponding to 1006, a causal relationship is determined under the condition that the once determined causal relationship is not retained.

In Fig. 12, reference numeral 1201 indicates that the process has shifted from the secondary extraction loop illustrated in Fig. 11 to the tertiary extraction loop in this figure. Similarly to 1006, reference numeral 1202 indicates a process of excluding a causal relationship from a subsequent determination process when the causal relationship is held in response to being detected once. As described in Fig. 6, reference numeral 1203 indicates a process of implementing a causal relationship by forcibly setting/resetting a status state as well as forcibly holding a change point. Thereafter, a simulation is performed (1204), and it is determined whether results match (1205). When the results do not match, the process shifts to the quaternary extraction loop (1208). When it is determined that the results match, the process returns to the primary extraction loop to extract a causal relationship at subsequent timing (1109). The tertiary extraction loop omits a process related to a case where the number of almost identical change points extracted in the primary and secondary extractions is 2. The forcible hold process in 1203 realizes a process corresponding to the tertiary extraction loop.

In Fig. 13, reference numeral 1301 indicates that the process has shifted from the tertiary extraction loop illustrated in Fig. 11 to the quaternary extraction loop in this figure. Similarly to 1203, reference numeral 1302 indicates a process of implementing a causal relationship by forcibly setting/resetting a status state as well as forcibly holding a change point as described in Fig. 6. Thereafter, a simulation is performed (1302), and it is determined whether results match

(1303). When the results do not match, an error process is performed and the process ends (1304). When it is determined that the results match, the process returns to the primary extraction loop to extract a causal relationship at subsequent timing (1305).

As described above, according to the flowcharts illustrated in Figs. 10, 11, 12 and 13, it is possible to perform a process of extracting a causal relationship by repeating an extraction loop while changing a combination of determination conditions illustrated in the table of Fig. 9. As a result, it is possible to automatically generate a control program for any model in which any type of control is performed, and it is possible to increase a processing speed by controlling a simulation model.

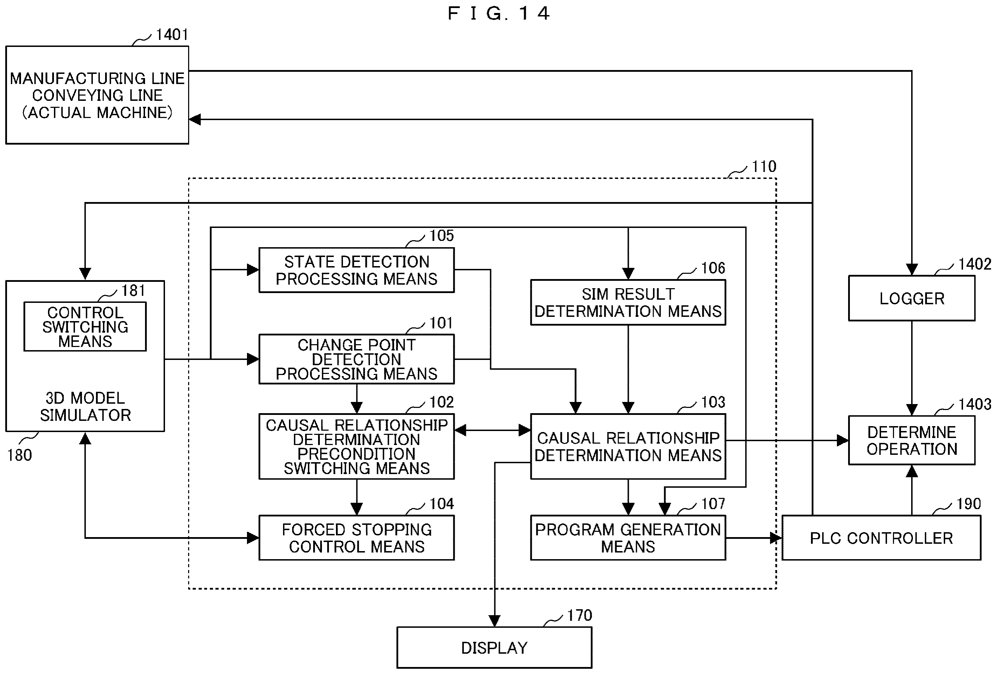

Next, an embodiment related to a control program development device will be described with reference to Fig. 14. Fig. 14 is a block diagram of the control program development device.

Each of elements 101 to 107 of Fig. 14 is the same as that described in Fig. 1, and the automatic generation device 110 for the control program including these elements is also the same as that described in Fig. 1. In addition, a 3D model simulator 180 and a control switching means 181 are also the same as those described in Fig. 1. Reference numeral 170 indicates a display that displays messages during the automatic generation process for the control program.

Content of the PLC controller 190 is the same as that described in Fig. 1. However, in this embodiment, the PLC controller 190 is connected to the 3D model simulator 180 to perform sequence control of the 3D model, and is also connected to an actual machine 1401 on a manufacturing line or a conveying line to control the actual machine 1401 on the manufacturing line or the conveying line.

Reference numeral 1402 indicates a logger that performs logging, and logs an operating state of the actual machine 1401 according to sequence control performed by the PLC controller 190. Reference numeral 1403 indicates an operation determination means, which compares timing information used by the causal relationship determination means 103 to determine a causal relationship with timing information logged by the logger 1402, and detects whether the information match and there is no problem, or where there is a discrepancy and where a problem lies. Note that the PLC controller 190, the logger 1402, and the operation determination means 1403 may be configured such that the logger 1402 and the operation determination means 1403 are included in the PLC controller 190.

More specifically, in the timing chart of Fig. 3, for each spot, which is a group of change points at substantially the same timing from 310 to 352, a causal relationship between an element serving as a cause and an element serving as a result among elements is extracted to automatically generate a control program from the causal relationship and timing information. Whether or not the actual machine is operating properly can be determined by the following processes (1), (2), and (3).
(1) A precedence relationship between a cause element and a result element of elements in each of the spots 310 to 352 matches a simulation and actual machine log (for example, in 321, product sensor on robot 1 precedes stop of conveyor 1 and start of robot 1).
(2) A difference in time interval between elements in each of the spots 310 to 352 is within a certain difference between the simulation and the actual machine log (for example, in 321, the difference between the simulation and the actual machine for the timing between product sensor on robot 1, stop of conveyor 1, and start of robot 1 is within a certain value).
(3) An interval between the respective spots 310 and 352 is within a certain difference between the simulation and the actual machine log determined in advance (for example, the timing difference between 310 and 321 is equal to or less than a certain value between the simulation and the actual machine log).

As described above, according to this embodiment, it is possible to easily compare only information related to automatic generation of the control program without blindly collecting an actual machine operation to be evaluated. As a result, it is possible to easily specify a spot to be checked when starting up the actual machine and perform comparison with an expected value. In addition, it is possible to easily collect evidence information for determining the actual machine operation.

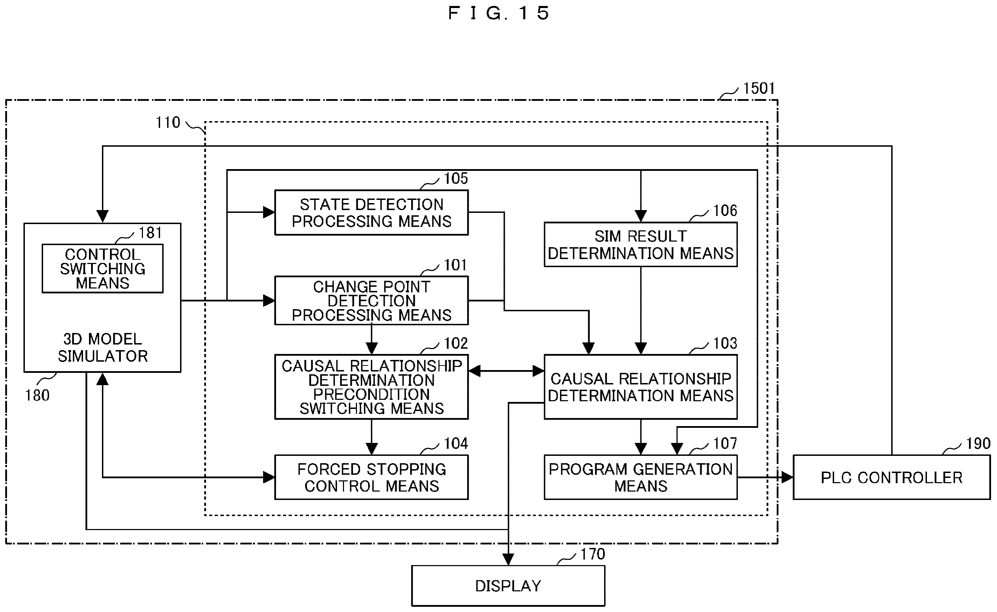

Next, a description will be given of an embodiment related to a simulation operating environment including an automatic generation processing device for a control program and a 3D model simulator with reference to Fig. 15.

Fig. 15 is a block diagram of the simulation operating environment. Each of the elements 101 to 107 of Fig. 15 is the same as that described in Fig. 1, and an automatic generation device 110 for the control program including these elements is also the same as that described in Fig. 1. In addition, a 3D model simulator 180 and a control switching means 181 are also the same as those described in Fig. 1.

As illustrated in the figure, a simulation operating environment 1501 of this embodiment includes the 3D model simulator 180 and the automatic generation device 110 for the control program, is realized by a general-purpose computer, etc., and is connected to a PLC controller 190.

According to this embodiment, it is possible to realize communication of a large amount of simulation result information required for the process of determining the causal relationship by forcible hold illustrated in Fig. 5, Fig. 6, etc. by signal transmission within a general-purpose computer. As a result, it is possible to increase communication speed, and by utilizing powerful computing power required for 3D model simulation, it is possible to realize calculation processing required for automatic generation processing for the control program. In addition, some users may desire to use different PLC controllers depending on the object to be controlled, and it is easy to connect different PLC controllers as needed.

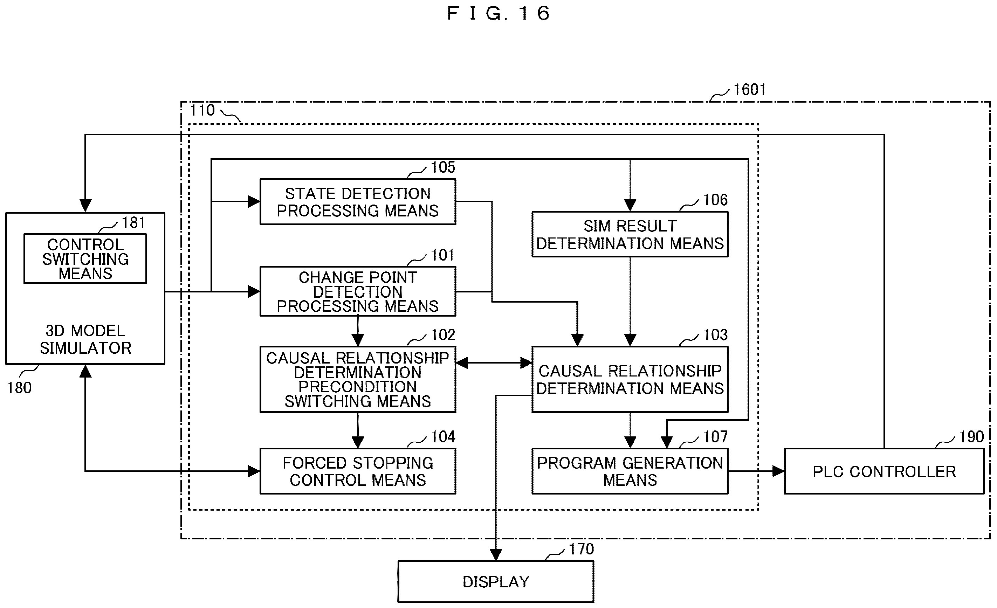

Next, an embodiment of an industrial control device including an automatic generation processing device 110 for a control program and a PLC controller 190 will be described with reference to Fig. 16. Fig. 16 is a block diagram of the industrial control device.

Each of elements 101 to 107 of Fig. 16 is the same as that described in Fig. 1, and the automatic generation device 110 for the control program including these elements is the same as that described in Fig. 1. In addition, the PLC controller 190 is the same as that described in Fig. 1, and a 3D model simulator 180 and a control switching means 181 are the same as those described in Fig. 1. In other words, the industrial control device including the automatic generation processing device 110 for the control program and the PLC controller 190 is realized by the computing device included in the PLC controller.

According to this embodiment, the automatic generation processing device 110 for the control program is realized by the computing device that realizes the PLC controller 190. The automatic generation processing device for the control program performs a process of converting timing information and causal relationship information into a PLC program template, thereby generating a program.

Even though there may be differences in the description of the PLC program due to differences in vendors, since the PLC program is realized by the computing device that realizes the PLC controller 190, it is possible to easily and reliably prepare a template for the PLC controller 190.

Furthermore, since the control program can be automatically generated regardless of an individual description method in the 3D simulator, even when each simulator of each simulation vendor has the best suited target, it is possible to freely select a 3D simulator based on a target of the user.

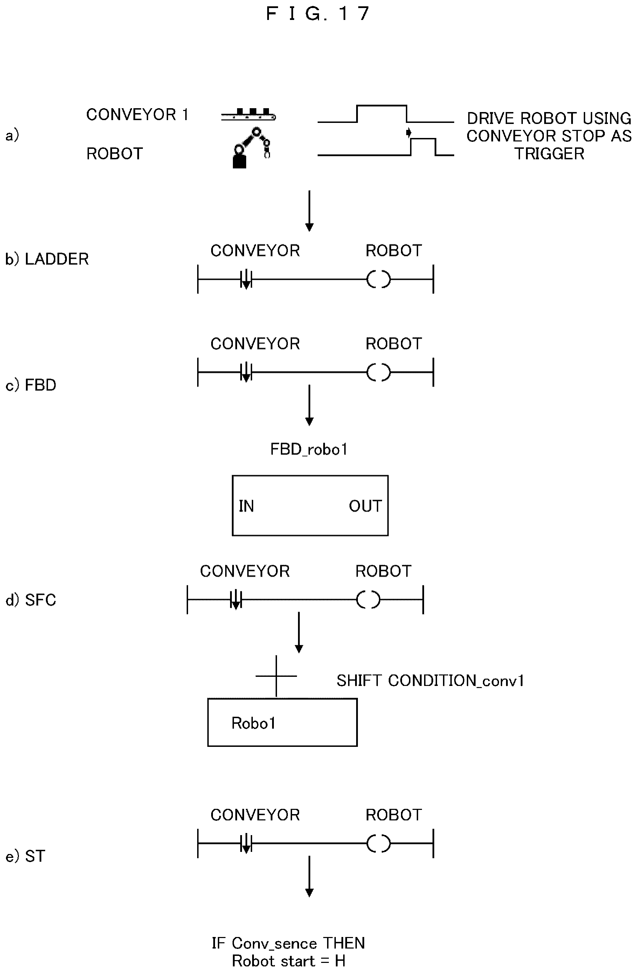

Next, a detailed description will be given of a method of automatically generating a sequence control program for an automated manufacturing line or conveying line from timing information and causal relationship information with reference to Fig. 17.

In Fig. 17, (a) is a diagram illustrating timing information and causal relationship information at a location where a simultaneous change point is present. (b) is a template of a PLC ladder program corresponding to timing information and causal relationship information at a spot of Fig. 17a. (c) is a template corresponding to the PLC ladder program corresponding to the timing information and the causal relationship information at the spot of (a) and description of a PLC function block.

(d) is a template corresponding to the PLC ladder program corresponding to the timing information and the causal relationship information at the spot of Fig. 17a and description of a PLC sequential function chart. (e) is a template of description of PLC standard text corresponding to the timing information and the causal relationship information at the spot of (a).

Since a spot at which the robot is started using stop of the conveyor operation as a trigger is converted into the ladder program of Fig. 17b, the spot of (a) is converted into a template of a ladder program corresponding to each spot of the time chart for the entire line illustrated in Fig. 3 to generate the entire sequence control program by connecting each converted template.

In the case of (c), the only difference is that a template to be associated is a function block, and other respects are the same as those in the case of (b) using ladder program generation. In the case of (d), the only difference is that a template to be associated is a sequential function chart, and other respects are the same as those in the case of (b) using ladder program generation.

In the case of (e), the only difference is that a template to be associated is standard text, and other respects are the same as those in the case of (b) using ladder program generation.

As described above, a desired control program can be obtained by converting each spot in the time chart into a template according to a desired description method of the PLC program, and combining each converted template.

As described above, in this embodiment, it is possible to automatically generate the entire control program by combining templates corresponding to timing information and causal relationship information of each spot in the time chart. In addition, by preparing a template according to each description method of the PLC program, it is possible to easily automatically generate a control program using a desired description method.

According to this embodiment, it is possible to automatically extract causal relationship information and timing information of a production line or a conveying line from a simulation model that models the production line or the conveying line, and to automatically generate a control program from the extracted information. Therefore, it is possible to significantly reduce a burden related to programming on a user and greatly facilitate the programming.

### REFERENCE SIGNS LIST

- 101: Change point detection processing means
- 102: Causal relationship determination precondition switching means
- 103: Causal relationship determination means
- 104: Forced stopping control means
- 105: State detection processing means
- 106: Sim result determination means
- 107: Program generation means

## Claims

1. A control program generation device comprising:
a change point detection unit configured to detect change points indicating occurrence of an operation at each timing of a plurality of component reproduced by a simulation model for a control target including the components from an output result of the simulation model;
a causal relationship detection unit configured to detect causal relationship information for classifying two or more change points occurring at substantially the same timing among the change points detected by the change point detection unit into a cause and a result based on the two or more change points; and
a program generation unit configured to generate a control program for the control target based on at least the causal relationship information.

2. The control program generation device according to claim 1, wherein the causal relationship detection unit has a first detection mode for detecting the causal relationship information based on a precedence relationship between the two or more change points.

3. The control program generation device according to claim 2, wherein the causal relationship detection unit has a second detection mode for detecting the causal relationship information from change in a simulation result when one of the change points at substantially the same timing is forcibly stopped.

4. The control program generation device according to claim 3, further comprising a first switching means configured to determine whether or not to detect the causal relationship information based on an assumption that the detected causal relationship information is retained after the timing at which detection is performed once, and to switch a detection scheme for the causal relationship information.

5. The control program generation device according to claim 4, further comprising a second switching means configured to switch between a first scheme of detecting the causal relationship information from change in the simulation result when one of the change points at substantially the same timing is forcibly stopped, and a second scheme of detecting the causal relationship information from change in the simulation result when one of state information and the change points at substantially the same timing is forcibly stopped, in the second detection mode.

6. The control program generation device according to claim 5, wherein, with respect to combination conditions resulting from a first switching condition in the first switching means and a second switching condition in the second switching means, the causal relationship detection unit detects the causal relationship information by sequentially adopting the combination conditions in which an amount of detection processing of the causal relationship information is small.

7. The control program generation device according to claim 1, further comprising a model simulator configured to output the simulation model of the control target including the plurality of components.

8. The control program generation device according to claim 1, further comprising a control unit configured to control the control target including the plurality of components according to the control program generated by the program generation unit.

9. A control program generation system comprising:
a control program generation unit configured to generate a control program for a control target including a plurality of components from timing information and causal relationship information of a simulation model of the control target;
a control unit configured to control an automated manufacturing line or conveying line according to the control program;
a logging unit configured to detect and store operation information of the manufacturing line or the conveying line; and
a determination unit configured to determine whether or not the manufacturing line or the conveying line is operating properly by comparing the timing information of the simulation model with the operation information stored in the logging unit.

10. A control program generation method comprising:
a change point detection step of detecting change points indicating occurrence of an operation at each timing of a plurality of component reproduced by a simulation model for a control target including the components from an output result of the simulation model;
a causal relationship detection step of detecting causal relationship information for classifying two or more change points occurring at substantially the same timing among the detected change points into a cause and a result based on the two or more change points; and
a program generation step of generating a control program for the control target based on at least the causal relationship information,
wherein the causal relationship detection step has a first detection mode for detecting the causal relationship information based on a precedence relationship between the two or more change points.

11. The control program generation method according to claim 10, wherein the causal relationship detection step further has a second detection mode for detecting the causal relationship information from change in a simulation result when one of the change points at substantially the same timing is forcibly stopped.

12. The control program generation method according to claim 10, further comprising a first switching step of determining whether or not to detect the causal relationship information based on an assumption that the detected causal relationship information is retained after the timing at which detection is performed once, and switching a detection scheme for the causal relationship information.

13. The control program generation method according to claim 11, further comprising a second switching step of switching between a first scheme of detecting the causal relationship information from change in the simulation result when one of the change points at substantially the same timing is forcibly stopped, and a second scheme of detecting the causal relationship information from change in the simulation result when one of state information and the change points at substantially the same timing is forcibly stopped, in the second detection mode.

14. The control program generation method according to claim 10, wherein a fixed delay of the control program is extracted based on change in each timing when a simulation cycle is changed in obtaining an output result of the simulation model.

15. The control program generation method according to claim 10, wherein, when states of state information and a change point at timing other than substantially the same timing of the detected change points are the same, counter control is performed based on an operation occurring every specific number of times.
